# EUROPÄISCHE PATENTSCHRIFT

(11) **EP 2 886 332 B1**
(45) Veröffentlichungstag und Bekanntmachung des Hinweises auf die Patenterteilung: **21.11.2018**
(21) Anmeldenummer: 13199058.2
(22) Anmeldetag: 20.12.2013
(51) Int. Cl.: B32B 15/01, C22C 38/00, C22C 38/02, C22C 38/04, C22C 38/06, C22C 38/26, C22C 38/28, C22C 38/32, C22C 38/38

(54) **STAHLFLACHPRODUKT, UND VERFAHREN ZUR HERSTELLUNG EINES BAUTEILS FÜR EINE FAHRZEUGKAROSSERIE UND EINER KAROSSERIE FÜR EIN KRAFTFAHRZEUG.**
FLAT STEEL PRODUCT, AND METHOD OF PRODUCING A COMPONENT OF A MOTOR VEHICLE BODY AND OF A MOTOR VEHICLE BODY.
PRODUIT EN ACIER PLAT, ET PROCÉDÉ DE FABRICATION D'UN COMPOSANT D'UNE CARROSSERIE DE VÉHICULE AUTOMOBILE ET D'UNE CARROSSERIE DE VÉHICULE AUTOMOBILE.

(43) Veröffentlichungstag der Anmeldung: 24.06.2015
(73) Patentinhaber: ThyssenKrupp Steel Europe AG, 47166 Duisburg (DE)
(72) Erfinder: Becker, Jens-Ulrik, 47058 Duisburg (DE); Gerber, Thomas, 44225 Dortmund (DE); Mura, Julia Carolin, 40474 Düsseldorf (DE); Myslowicki, Stefan, 41238 Mönchengladbach (DE)
(74) Vertreter: Cohausz & Florack

(56) Entgegenhaltungen:
- EP-A2- 1 908 547
- DE-A1-102007 022 453
- DE-A1-102008 022 709
- Hoesch Hohenlimburg: "22MnB5: Warmgewalztes Mittelband Werkstoffdatenblatt", ThyssenKrupp , August 2013 (2013-08), XP002726375, Gefunden im Internet: URL:http://www.hoesch-hohenlimburg.de/proj ekt/web2013/hhowebcms.nsf/www/BDCD8110DFD5 5989C1257B250049D2D4/$File/WB_20%20Mn%20B% 205%20-%20HLB%2020-Seite1%20-%201.5530.pdf [gefunden am 2014-06-27]
- U. S. Steel Kosice, s. r. o: "Micro-alloyed grade sheets - U. S. Steel Kosice, s. r. o", , 12. März 2005 (2005-03-12), XP002726391, Gefunden im Internet: URL:http://www.usske.sk/products/cat/coate d/hot-dip/microalloyed.html [gefunden am 2014-06-27]
- BSS Steel Strip: "Steel Strip Specifications", Steelstrip co. uk , 28. April 2012 (2012-04-28), XP002726392, Gefunden im Internet: URL:http://www.steelstrip.co.uk/internatio nal_equivalents.htm [gefunden am 2014-06-27]
- KARBASIAN H ET AL: "A review on hot stamping", JOURNAL OF MATERIALS PROCESSING TECHNOLOGY, Bd. 210, Nr. 15, 19. November 2010 (2010-11-19), Seiten 2103-2118, XP027378020, ELSEVIER, NL ISSN: 0924-0136 [gefunden am 2010-08-06]

## Beschreibung

Die Erfindung betrifft ein Stahlflachprodukt, sowie ein Verfahren zur Herstellung eines Bauteils für eine Fahrzeugkarosserie, bei dem das Stahlflachprodukt warmumgeformt und anschließend gehärtet wird. Unter dem Begriff "Stahlflachprodukt" werden hier durch einen Walzprozess erzeugte Stahlbleche oder Stahlbänder sowie davon abgeteilte Platinen und desgleichen verstanden.
Sofern hier Legierungsgehalte lediglich in "%" angegeben sind, ist damit immer "Gew.-%" gemeint, sofern nicht ausdrücklich etwas anderes angegeben ist.
Die im Bereich des Automobilbaus an die Passagiersicherheit im Crashfall gestellten Anforderungen steigen immer weiter. Gleichzeitig stellt der Leichtbau eine wichtige Voraussetzung für die Einhaltung der gesetzlich vorgegebenen CO₂-Grenzwerte und für die Minimierung des zum Antrieb des Fahrzeugs benötigten Energieeinsatzes dar. Ebenso bestehen auch seitens der Nutzer von Fahrzeugen immer höhere Ansprüche hinsichtlich des Komforts, was zu einem erhöhten Anteil von elektronischen Komponenten im Fahrzeug und einem dadurch zunehmenden Fahrzeuggewicht führt. Um diese widersprüchlichen Anforderungen gleichzeitig zu erfüllen, steht seit längerem die Leichtbauweise bei der Fertigung von Karosseriestrukturen für den Automobilbau im Fokus.

Für crashrelevante Automobilbauteile haben sich hier insbesondere Bauteile durchgesetzt, die durch Warmumformen und im Anschluss daran erfolgendes Härten von Stahlflachprodukten hergestellt werden, die aus einem Mangan-Bor-Stahl bestehen. Durch diese in der Fachsprache auch als "Presshärten" bezeichnete Fertigungsmethode können Bauteile hergestellt werden, die sich trotz optimal dünner Wandstärken und damit einhergehend minimiertem Gewicht an hinsichtlich ihres Verhaltens im Falle eines Crashs besonders sensiblen Punkten einer Fahrzeugkarosserie einsetzen lassen.

Ein typisches Beispiel für einen Mangan-Bor-Stahl der voranstehend erwähnten Art ist der in der Fachwelt unter der Bezeichnung 22MnB5 bekannte Stahl, der die Werkstoffnummer 1.5528 erhalten hat. Durch eine Warmumformung und ein daran anschließend durchgeführtes Presshärten lassen sich aus Stählen dieser Art Bauteile erzeugen, die bei komplexer Geometrie optimal maßhaltig sind.

Die durch Presshärten aus MnB-Stählen gefertigten Bauteile erreichen aufgrund ihres überwiegend martensitischen Gefüges höchste Festigkeiten bei geringem Gewicht. Dabei haben sich MnB-legierte Stahlsorten bewährt, deren Zugfestigkeit Rm bei ca. 1.500 MPa und deren Dehngrenze R_{P0,2} bei ca. 1.100 MPa liegt. Ein zur Klasse der MnB-Stähle zählender, entsprechende Festigkeitswerte liefernder Stahl weist neben Eisen und erschmelzungsbedingt unvermeidbaren Verunreinigungen beispielsweise (in Gew.-%) 0,22 - 0,25 % C, 0,2 - 0,3 % Si, 1,2 - 1,4 % Mn, bis zu 0,025 % P, bis zu 0,01 % S, 0,02 - 0,05 % Al, 0,1 - 0,2 % Cr, 0,025 - 0,04 % Ti und 0,002 - 0,0035 % B auf.

DE 10 2008 022709 A1 offenbart dreilagige Stahlflachprodukte umfassend eine Kernlage aus einer höherfesten oder höchstfesten Stahllegierung und Decklagen aus weichen, gut umformbaren Stahllegierungen, für die Ausgestaltung einer B-Säule oder vergleichbarer stabilisierender Karosserieelemente.

EP 1 908 547 A2 offenbart ein Stahlflachprodukt umfassend eine Schicht aus gehärtetem Stahl und Decklagen aus DC04 Stahl, z.B. zur Herstellung einer B-Säule eines PKWs.

Jüngere Entwicklungen zielen nun darauf ab, Stahlbauteile für den Automobilkarosseriebau zu fertigen, die noch höhere Festigkeiten erreichen. Solche Warmumformstähle mit erhöhter Festigkeit greifen auf Stahlkonzepte zurück, die vom generellen Typus her den voranstehend erläuterten MnB-Stählen ähnlich sind, jedoch höhere Kohlenstoffgehalte aufweisen, die im gehärteten Zustand zu höheren Werkstoff- bzw. Bauteilfestigkeiten führen. Diese erhöhten Werkstoff- bzw. Bauteilfestigkeiten gehen einher mit hoher Härte. Entsprechend legierte MnB-Stähle erreichen regelmäßig Zugfestigkeiten von 1700 MPa und mehr.
Insbesondere durch mechanische Schneidprozesse bei der Weiterverarbeitung von aus den hochfesten, hohe Kohlenstoffgehalte aufweisenden MnB-Stählen durch Pressformhärten erzeugten Bauteilen besteht allerdings die Gefahr, dass lokal begrenzte Eigenspannungen oder Eigenspannungsgradienten in das Bauteil eingebracht werden. Diese führen aufgrund der hohen Härte des Werkstoffes zu einer starken Empfindlichkeit gegenüber wasserstoffinduzierter Rissbildung. Aus den hochfesten Stahlgüten erzeugte Bauteile können daher nur unter genauer Kontrolle von Einbausituation und Beanspruchung erfolgen. Auch muss bei der Verarbeitung unter Umständen auf einen Beschnitt im gehärteten Zustand verzichtet oder es müssen zusätzliche Temperschritte und eine genaue Atmosphärenkontrolle im Warmumformprozess angewendet werden.

Ein weiteres Problem bei der Verarbeitung von Bauteilen, die aus Stählen mit mittleren bis hohen Kohlenstoffgehalten hergestellt sind, entsteht durch ihre reduzierte Verschweißbarkeit. Die verminderte Schweißeignung zeigt sich insbesondere in einer vergleichbar geringen Belastbarkeit der zum Verschweißen von artgleichen oder unterschiedlichen Stahlsorten gesetzten Schweißpunkte. Bedingt durch die relative Schwäche der Schweißpunkte können die Bauteile nicht ihre gesamte Festigkeit ausspielen.

Aus der DE 10 2008 022 709 A1 ist bereits bekannt, dass Bauteile für Fahrzeugkarosserien aus durch Walzplattieren erzeugten Verbundwerkstoffen hergestellt werden können, bei denen einzelne aus unterschiedlichen Stählen bestehende Lagen so miteinander kombiniert werden, dass der Verbundwerkstoff bzw. das daraus hergestellte Bauteil Eigenschaften erhält, die ein Bauteil, das aus einem aus einem einheitlichen Stahl bestehenden Stahlflachprodukt geformt wird, nicht erreichen würde. So lässt sich gemäß diesem Stand der Technik beispielsweise ein gut umformbarer, rissunempfindlicher Stahl als Decklage mit einem hochfesten MnB-Stahl kombinieren, um daraus eine B-Säule oder ein vergleichbares Karosseriestrukturelement zu formen. Der Werkstoff der Decklage kann dabei so ausgewählt werden, dass die Kernlage die erforderliche Festigkeit bereitstellt und die Decklage die Kernlage gegen wasserstoffinduzierte Rissbildung schützt sowie eine ausreichende Schweißbarkeit bereitstellt. Allerdings beschränkt sich dieser Stand der Technik auf die Verwendung konventioneller Stähle als Werkstoff für die Kernlage, die im Festigkeitsbereich von bis zu 1500 MPa liegen.

Vor dem Hintergrund des voranstehend erläuterten Standes der Technik bestand die Aufgabe der Erfindung darin, ein für die Herstellung von Bauteilen für Kraftfahrzeugkarosserien durch Presshärten besonders geeignetes Stahlflachprodukt zu nennen, das bei weiter erhöhter Festigkeit unempfindlich ist gegen Rissbildung und eine für die Einbindung in eine Schweißkonstruktion ausreichende Schweißeignung besitzt.

Ebenso sollte ein Verfahren zur Herstellung eines entsprechend beschaffenen Bauteils für eine Fahrzeugkarosserie und ein Verfahren zur Herstellung einer ein solcherart hergestelltes Bauteil umfassenden Karosserie geschaffen werden, bei der eine hochbelastbare Verbindung des betreffenden Bauteils mit den angrenzenden Bauteilen gewährleistet ist.

In Bezug auf das Stahlflachprodukt ist diese Aufgabe erfindungsgemäß dadurch gelöst worden, dass ein solches Stahlflachprodukt die in Anspruch 1 angegebenen Merkmale besitzt.

In Bezug auf das Bauteil wird die oben angegebene Aufgabe dementsprechend dadurch gelöst, dass es durch Warmformen und anschließendes Härten eines erfindungsgemäß ausgebildeten Stahlflachprodukts hergestellt wird.

Schließlich besteht die erfindungsgemäße Lösung der oben genannten Aufgabe in Bezug auf das Verfahren zur Herstellung einer Karosserie für ein Kraftfahrzeug darin, dass für eine solche Karosserie mindestens ein erfindungsgemäß hergestelltes Bauteil bereitgestellt wird und dieses Bauteil, mit mindestens einem weiteren Bauteil der Karosserie durch Schweißen verbunden wird.

Vorteilhafte Ausgestaltungen der Erfindung sind in den abhängigen Ansprüchen angegeben und werden nachfolgend, wie der allgemeine Erfindungsgedanke im Einzelnen erläutert.

Ein erfindungsgemäßes Stahlflachprodukt umfasst somit in Übereinstimmung mit dem oben erwähnten Stand der Technik eine Kernlage und eine Decklage, die stoffschlüssig mit der Kernlage verbunden ist.

Erfindungsgemäß besteht nun die Kernlage aus einem mit Mn, B und 0,3 bis 0,5 Gew.-% C legierten Stahl, der eine Zugfestigkeit von mehr als 1500 MPa, insbesondere mehr als 1650 MPa, im fertig gehärteten Zustand aufweisenden Stahl aufweist. Es versteht sich dabei von selbst, dass hier nur die die Eigenschaften des Stahls der Kernlage erstrangig bestimmenden Legierungselemente genannt sind und dass der Stahl weitere Legierungselemente in wirksamen Gehalten enthalten kann, wie in Anspruch 1 definiert, um jeweils bestimmte Eigenschaften auszuprägen.
Die stoffschlüssig mit der Kernlage verbundene Decklage weist dagegen einen deutlich niedrigeren C-Gehalt von höchstens 0,09 Gew.-% auf. Damit einhergehend beträgt auch im Bereich der Decklage die Zugfestigkeit des erfindungsgemäßen Stahlflachprodukts höchstens die Hälfte der Zugfestigkeit des Stahls der Kernlage im fertig gehärteten Zustand. Gleichzeitig weist das erfindungsgemäße Stahlflachprodukt im Bereich seiner Decklage eine Dehnung A80 auf, die mindestens dem 1,5-fachen der Dehnung A80 der Kernlage im fertig gehärteten Zustand entspricht.
Die Erfindung kombiniert somit als Werkstoff für die Kernlage einen Stahl, dessen Festigkeit durch einen hohen C-Gehalt gegenüber dem Stand der Technik deutlich angehoben ist, mit einem gut verformbaren, für die Decklage bestimmten Stahl, dessen C-Gehalt so abgesenkt ist, dass er einerseits eine optimale, durch eine vergleichbar niedrige Festigkeit und hohe Dehnwerte charakterisierte Verformbarkeit besitzt und sich andererseits besonders gut mit anderen Stahlbauteilen zu einer Karosseriestruktur verschweißen lässt.

Die Erfindung stellt auf diesem Wege eine Möglichkeit zur Verfügung, hochfeste MnB-Stähle, die hohe C-Gehalte und damit einhergehend eine hohe Zugfestigkeit und Härte besitzen, einer breiteren Verwendung im Fahrzeugkarosseriebau zugänglich zu machen. Das der Erfindung zugrundeliegende Lösungsprinzip beruht dabei auf einem schichtförmigen Aufbau des erfindungsgemäßen Stahlflachprodukts. An der Oberfläche (Decklage) liegt eine geringere Festigkeit (Härte) vor, die Kernlage besteht dagegen aus einem hochfesten Stahl im nach dem Warmpresshärten erhaltenen Zustand.

Die weichere Oberflächenschicht (Decklage) ist primär unempfindlicher gegen Rissinitiierung, da der Werkstoff hier aufgrund seiner geringeren Härte eine reduzierte Kantenrissempfindlichkeit bzw. Kerbempfindlichkeit aufweist. Hierdurch ist der erfindungsgemäße Verbundwerkstoff weniger empfindlich gegenüber dem Phänomen des "Delayed Fracture's", einem in Folge von Wasserstoffeinlagerung an Oberflächenrissen eintretenden verzögerten Bruch eines aus dem erfindungsgemäßen Stahlflachprodukt gefertigten Bauteils. Durch den höchstfesten Kern ergeben sich dabei Werkstoffe, die in ihrer Gesamtfestigkeit höher liegen als die Verbundwerkstoffe, die auf Grundlage von konventionellen MnB-Stählen gefertigt sind.

Des Weiteren führen die weichen Außenschichten zu besseren Umformeigenschaften. Durch die erfindungsgemäß vorgesehene weiche, geringe Festigkeiten und eine hohe Dehnung aufweisenden Randschichten können höhere Biegewinkel im statischen Plättchenbiegetest (VDA 230-100) erreicht werden. Beide Aspekte sind bei Crashbeanspruchungen von Bedeutung und verzögern die Rissinitierung sowie Risseinleitung, wodurch eine insgesamt höhere Energieaufnahme im Fall eines Crashs erreicht wird.
Neben der Vermeidung von Rissen trägt der erfindungsgemäße Schichtaufbau eines Verbundwerkstoffs zur Verbesserung der Schweißbarkeit bei. Hier zeigt sich, dass es aufgrund des geringen C-Gehalts der Deckschicht eines erfindungsgemäßen Stahlflachprodukts nicht zu der bei MnB-Stählen mit hohen C-Gehalt andernfalls eintretenden Versprödung und damit einhergehenden Schwächung der Schweißverbindungen solcher Warmumformstähle kommt. Um diesen Effekt zu gewährleisten, hat der Stahl der Decklage einen C-Gehalt von höchstens 0,09 Gew.-%, bevorzugt von weniger als 0,07 %. Stähle dieser Art sind an sich bekannt. Bei ihnen handelt es sich beispielsweise um konventionelle IF-Stähle oder Stähle, die unter der Handelsbezeichnung "DC03" und "H340" bekannt sind, bis hin zu Complexphasenstählen.
Durch den mehrschichtigen Aufbau des erfindungsgemäßen Werkstoffverbundes erfolgt beim Schweißen die Anbindung der Schweißlinse an ihre Umgebung im Bereich des Übergangs von der äußeren weichen und zur harten Kernlage. Durch Einhaltung einer ausreichenden Dicke der Decklage, d. h. durch eine geeignete Wahl des Verhältnisses von Dicke der Auflage zur Dicke des Kerns, kann dementsprechend eine positive Beeinflussung der Schweißqualität einerseits (Prozess) und der Belastbarkeit der fertigen Schweißverbindung im Sinne einer maximalen Kraftübertragung andererseits erreicht werden.
Der Einsatz eines erfindungsgemäß mehrlagigen, mit einer kohlenstoffarmen, sehr gut schweißbaren Decklage versehenen Stahlflachprodukts zieht zwar ein Absinken der Festigkeit des erfindungsgemäßen Stahlflachprodukts im Vergleich zu einem Stahlflachprodukt nach sich, das ausschließlich aus dem Stahl der Kernlage gefertigt ist.

Jedoch hat sich überraschend gezeigt, dass die Gesamtfestigkeit eines aus einem erfindungsgemäßen Stahlflachprodukt gefertigten Bauteils trotz der Kombination mit einem weichen, wenig festen Decklagen-Werkstoff immer noch deutlich über der Festigkeit eines Bauteils liegt, das aus einem konventionellen hochfesten MnB-Stahl gefertigt ist.

Um ausreichend hohe Festigkeiten des Stahls der Kernlage im gehärteten Zustand zu gewährleisten, weist der für die Kernlage erfindungsgemäß vorgesehene Stahl mindestens 0,3 Gew.-% Kohlenstoff auf in Hinblick auf die angestrebte Festigkeit.

Die Erfindung stellt so ein Stahlflachprodukt zur Verfügung, bei dem eine hohe Festigkeit und ein hohes Umformvermögen mit einer guten Schweißeignung und einer geringen Rissempfindlichkeit gepaart sind. Die Erfindung beseitigt so die im Stand der Technik bisher bestehenden Einschränkungen der Verwendung von höchstfesten MnB-Stählen mit C-Gehalten von mehr als 0,25 Gew.-%, insbesondere mehr als 0,3 Gew.-%.
Das Dickenverhältnis von Decklage zu Kernlage kann abhängig davon gesetzt werden, welche Eigenschaft des erfindungsgemäßen Stahlflachprodukts in den Vordergrund gestellt werden soll. Eine optimierte Schweißbarkeit wird dabei dadurch gewährleistetdass die Kernlage 60 - <80 %, insbesondere 60 - <70 %, der Dicke des Stahlflachprodukts einnimmt. Die Decklage ist in diesem Fall dicker, so dass für den Schweißvorgang vergleichbar viel Volumen an weichem, kohlenstoffarmen und damit wenig versprödungsanfälligem Stahl der Decklage zur Verfügung steht.

Typischerweise weist der für die Kernlage eines erfindungsgemäßen Stahlflachprodukts verwendete Stahl für sich gesehen eine Zugfestigkeit von mindestens 1700 MPa auf.

Optimale Verformungseigenschaften eines erfindungsgemäßen Stahlflachprodukts ergeben sich dann, wenn die Zugfestigkeit der Decklage höchstens einem Drittel der Zugfestigkeit der Kernlage entspricht. Ein für die Decklage besonders geeigneter, 0,08 Gew.-% C enthaltender Stahl weist hier beispielsweise bei einer Dehnung A80 von mindestens 21 % eine Zugfestigkeit von 400 - 500 MPa und eine Streckgrenze von 340 - 420 MPa auf.

Um die gewünschte Verformbarkeit bei gleichzeitig sicherem Schutz gegen Rissbildung zu gewährleisten, kann die Dehnung A80 der Decklage mindestens doppelt so hoch sein wie die Dehnung A80 der Kernlage im fertig gehärteten Zustand.

Die Decklage kann durch Walzplattieren auf die Kernlage aufgebracht werden. Ein hierzu geeignetes Verfahren ist beispielsweise in der DE 10 2005 006 606 B3 beschrieben, deren Inhalt zwecks Erläuterung der beim Walzplattieren vom Fachmann üblicherweise absolvierten Arbeitsschritte in die vorliegende Anmeldung einbezogen wird.
Der für die Kernlage in der Praxis einsetzbare Stahl besteht typischerweise neben Eisen und herstellungsbedingt unvermeidbaren Verunreinigungen aus (in Gew.-%)
C: 0,3 - 0,5 %, insbesondere 0,3 - 0,45 %,
Si: 0,150 - 0,350 %, insbesondere 0,2 - 0,28 %,
Mn: 1,100 - 1,400 %, insbesondere 1,15 - 1,3 %,
Al: 0,020 - 0,050 %, insbesondere 0,03 - 0,04 %,
Cr: 0,100 - 0,500 %, insbesondere 0,14 - 0,45 %,
Ti: 0,020 - 0,040 %, insbesondere 0,026 - 0,34 %,
B: 0,002 - 0,004 %, insbesondere 0,002 - 0,003 %.
Zu den Verunreinigungen zählen dabei P: bis zu 0,020 %, S: bis zu 0,003 %, Cu: bis zu 0,100 %, Mo: bis zu 0,050 %, N: bis zu 0,007 %, Ni: bis zu 0,100 %, Nb: bis zu 0,003 %, V: bis zu 0,010 %, Sn: bis zu 0,030 %, Ca: bis zu 0,005 %.
Die Decklage eines erfindungsgemäßen Stahlflachprodukts besteht dagegen aus einem Stahl, der neben Eisen und herstellungsbedingt unvermeidbaren Verunreinigungen (in Gew.-%)
C: bis zu 0,09 %, insbesondere 0,002 - 0,075,
Si: bis zu 0,7 %, insbesondere 0,01 - 0,6 %,
Mn: 0,10 - 1,9 %, insbesondere 0,13 - 1,8 %,
Al: bis zu 0,06 %, insbesondere 0,03 - 0,04 %,
Cr: bis zu 0,4 %, insbesondere 0,025 - 0,35 %,
Nb: bis zu 0,025 %, insbesondere 0,002 - 0,02 %,
Ti: bis zu 0,13 %, insbesondere 0,002 - 0,12 %,
enthält. Zu den Verunreinigungen zählen dabei P: bis zu 0,025 %, S: bis zu 0,015 %, Cu: bis zu 0,15 %, Mo: bis zu 0,05 %, N: bis zu 0,006 %, Ni: bis zu 0,15 %, V: bis zu 0,02 %, B: bis zu 0,001 %, Sn: bis zu 0,04 % und Ca: bis zu 0,003 %.
Nachfolgend wird die Erfindung anhand von Ausführungsbeispielen näher erläutert. Es zeigen:
- Fig. 1: ein Diagramm, in dem die Zugfestigkeiten von aus konventionellen Stahlflachprodukten und dem erfindungsgemäßen Stahlflachprodukt V5* durch Warmpressformhärten erzeugten Bauteilproben aufgeführt sind;
- Fig. 2: ein Diagramm, in dem für aus einem konventionellen Stahlflachprodukt, einem nicht erfindungsgemäßen Stahlflachprodukt und dem erfindungsgemäßen Stahlflachprodukt V5* durch Warmpressformhärten erzeugte Bauteilproben die Ergebnisse der gemäß SEP 1220 durchgeführten Prüfung einer von einer Schweißstelle bis zum Bruch aufgenommenen Scherzugkräfte verzeichnet sind;
- Fig. 3: die Ergebnisse gemäß DIN EN ISO 7539-2 durchgeführten Prüfung der verzögerten Rissbildung ("Delayed Fracture") bei Bauteilproben, die aus einem konventionellen Stahlflachprodukt und zwei erfindungsgemäßen Stahlflachprodukten hergestellt sind.

Aus in konventioneller Weise erzeugten, im Handel erhältlichen Stahlflachprodukten A1 - A4 und K1 - K4 sind durch Walzplattieren als Werkstoffverbund ausgebildete Stahlflachprodukte V1, V2, V3, V3*, V4*, V4, V5, V5*, V6, V7, V7* und V8 erzeugt worden. Die jeweilige Zusammensetzung der aus weichen Stählen bestehenden Stahlflachprodukte A1 - A4 und der aus hochfesten Stählen bestehenden Stahlflachprodukte K1 - K4 sind in Tabelle 1 angegeben.

In Tabelle 2 ist vermerkt, welches Stahlflachprodukt A1 - K4 die jeweilige Kernlage KL, welches Produkt die jeweilige Außenlagen AL gebildet hat und welchen Anteil A-KL die Kernlage KL an der Dicke des jeweiligen Verbundwerkstoff-Stahlflachprodukts V1 - V8 hatte. Der Bereich der Zugfestigkeiten Rm, die für die jeweils aus den Verbundwerkstoff-Stahlflachprodukten V1 - V8 pressformgehärteten Bauteile ermittelt werden konnte, ist in Tabelle 2 zusätzlich angegeben.

Für das Walzplattieren sind Blechzuschnitte der miteinander kombinierten Stahlflachprodukte A1 - K4 zu Stapeln aufeinander gelegt worden, bei denen jeweils eine Kernlage KL zwischen zwei Außenlagen AL angeordnet war. Die Blechzuschnitte sind zuvor mindestens an ihren im Stapel am jeweils benachbarten Blechzuschnitt anliegenden Oberfläche gereinigt und so mechanisch bearbeitet worden, dass ein weitestgehend vollflächiger Kontakt gewährleistet war. Die Blechzuschnitte der jeweiligen Stapel sind anschließend miteinander verschweißt worden. Der so gebildete feste Verbund ist in ein oder mehreren Stufen zu einem Verbundwerkstoff-Stahlflachprodukt mit einer Dicke von beispielsweise 3 mm warmgewalzt worden. Abschließend kann das erhaltene Verbundwerkstoff-Stahlflachprodukt noch einem Kaltwalzen unterzogen werden, um seine Dicke weiter zu reduzieren. Der beim Walzplattieren eingehaltene Verfahrensablauf ist im Einzelnen in der DE_10 2005 006 606_B3 beschrieben, deren Inhalt zum Zwecke der Erläuterung in die vorliegende Anmeldung einbezogen wird.

Aus den so gewonnenen Verbundwerkstoff-Stahlflachprodukten V1 - V8 sind Platinen abgeteilt und durch Presshärten zu identisch geformten Stahlbauteilen umgeformt worden. Dazu sind die aus den Verbundwerkstoffen V1 - V8 bestehenden Platinen auf eine oberhalb der höchsten Austenitisierungstemperatur der Stähle der jeweils miteinander kombinierten Stahlflachprodukte A1 - A4, K1 - K4 erwärmt worden. Die dabei erreichten Temperaturen lagen typischerweise im Bereich von ca. 900 - 950 °C. Anschließend sind die Platinen in einem gekühlten Pressformwerkzeug umgeformt worden. Im Zuge der Umformung erfolgte im Pressformwerkzeug eine schnelle Abkühlung mit einer Abkühlrate von mindestens 27 K/s, beispielsweise 27 - 30 K/s, so dass in den aus den Platinen fertig pressgeformten Probenbauteilen Härtungsgefüge vorlag.

Zum Vergleich sind durch in derselben Weise durchgeführtes Presshärten aus den Stahlflachprodukten A1 - K4 jeweils Probenbauteile erzeugt worden, deren Form ebenfalls den aus den Verbundwerkstoff-Stahlflachprodukten V1 - V8 hergestellten Bauteilen entsprach.

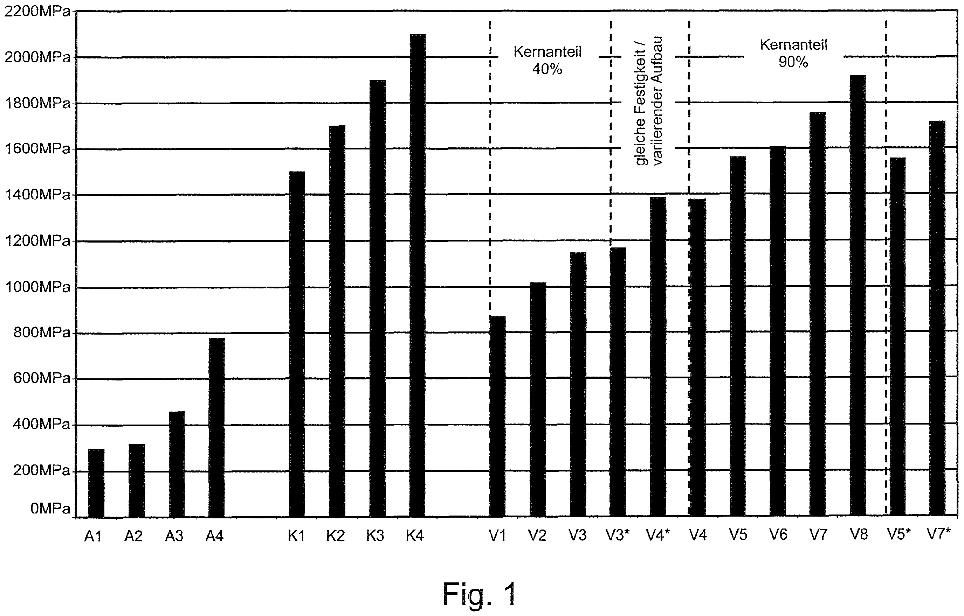

Wie aus Fig. 1 ersichtlich, konnte durch die Wahl des Dickenanteils der jeweils aus hochfestem Stahl bestehenden Kernlage KL die Festigkeit des jeweiligen Stahlflachprodukten V1 - V8 direkt beeinflusst werden. Die Festigkeit der erfindungsgemäßen Bauteile lag dabei stets oberhalb der maximalen Festigkeit der aus den weichen Stählen A1 - A4 bestehenden Bauteile.

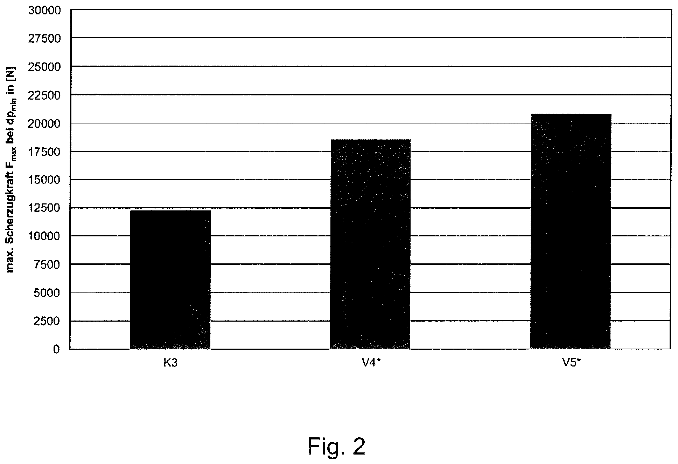

In Fig. 2 sind die Ergebnisse einer gemäß SEP 1220 durchgeführten Scherzugkraftprüfung wiedergegeben, die an verschweißten, durch Warmpressformhärten hergestellten Bauteilproben durchgeführt worden sind. Eine Gruppe der untersuchten Bauteilproben bestand dabei aus dem konventionellen Stahlflachprodukt K3, eine aus dem erfindungsgemäßen Stahlflachprodukt V4* und eine weitere aus dem ebenfalls erfindungsgemäßen Stahlflachprodukt V5*. Die Versuche zeigen, dass die Verschweißungen bei den aus den erfindungsgemäßen Stahlflachprodukten V4*, V5* erzeugten Bauteilproben jeweils Scherzugkräfte ertragen, die deutlich über den Scherzugkräften liegen, welchen von den Verschweißungen der aus dem konventionellen Stahlflachprodukt K3 bestehenden Bauteilprobe ertragen werden.

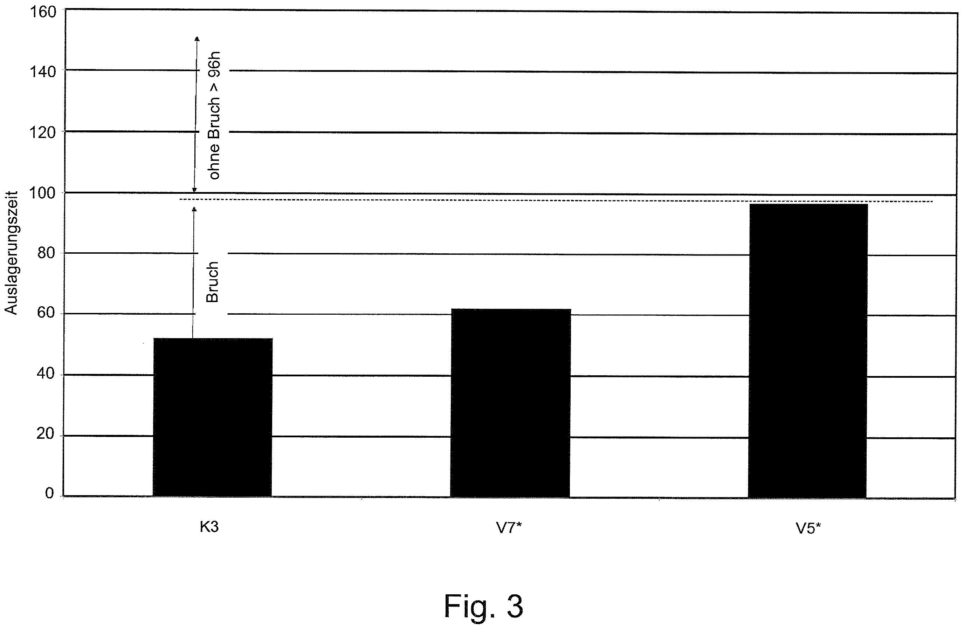

In Fig. 3 sind die Ergebnisse von gemäß DIN EN ISO 7539-2 durchgeführten Vierpunkt-Biegeversuchen dargestellt, die an durch Warmpressformhärten hergestellten Bauteilproben durchgeführt worden sind. Eine Gruppe der untersuchten Bauteilproben bestand dabei aus dem konventionellen Stahlflachprodukt K3, eine aus dem erfindungsgemäßen Stahlflachprodukt V5* und eine weitere aus dem nicht erfindungsgemäßen Stahlflachprodukt V7*. Auch hier erweist sich die aus dem erfindungsgemäßen Stahlflachprodukt erzeugte Bauteilprobe der aus dem Stahlflachprodukt K3 erzeugten Probe deutlich überlegen. So kam es bei den aus dem Stahlflachprodukt K3 bestehenden Bauteilproben bereits nach einer Auslagerungszeit von 52 Stunden zur Rissbildung, während der Bruch bei der aus dem nicht erfindungsgemäßen Stahlflachprodukt V7* bestehenden Bauteilprobe erst nach 62 Stunden und bei der aus dem erfindungsgemäßen Stahlflachprodukt V5* bestehenden Bauteilprobe bis zu 97 Stunden kein Bruch eintrat.

**Tabelle 1**

| | **C** | **Si** | **Mn** | **P** | **S** | **Al** | **Cr** | **Nb** | **Ti** | **B** |
|---|---|---|---|---|---|---|---|---|---|---|
| **A1** | 0,0030 | 0,020 | 0,130 | 0,010 | 0,0120 | 0,0325 | 0,0500 | 0,0050 | 0,0700 | 0,0004 |
| **A2** | 0,0375 | 0,040 | 0,250 | 0,015 | 0,0150 | 0,0400 | 0,0600 | 0,0040 | 0,0040 | 0,0006 |
| **A3** | 0,0700 | 0,205 | 0,800 | 0,020 | 0,0060 | 0,0400 | 0,0750 | 0,0200 | 0,0040 | -- |
| **A4** | 0,0750 | 0,600 | 1,775 | 0,015 | 0,0030 | 0,0350 | 0,3500 | 0,0100 | 0,1200 | 0,0005 |
| **K1** | 0,2350 | 0,250 | 1,300 | 0,010 | 0,0015 | 0,0350 | 0,1500 | 0,0015 | 0,0300 | 0,0028 |
| **K2** | 0,2850 | 0,275 | 1,175 | 0,018 | 0,0013 | 0,0350 | 0,4500 | 0,0030 | 0,0325 | 0,0028 |
| **K3** | 0,3500 | 0,250 | 1,300 | 0,010 | 0,0015 | 0,0350 | 0,1400 | 0,0015 | 0,0325 | 0,0028 |
| **K4** | 0,4200 | 0,225 | 1,300 | 0,020 | 0,0030 | 0,0350 | 0,3500 | 0,0030 | 0,0275 | 0,0030 |

| | | | | | | | | | | |
|---|---|---|---|---|---|---|---|---|---|---|
| Legierungsangaben in Gew.-%, Rest Eisen und unvermeidbare Verunreinigungen | | | | | | | | | | |

**Tabelle 2**

| **Bauteil** | **AL** | **KL** | **A-KL** | **Rm** |
|---|---|---|---|---|
| V1 | A2 | K1 | 40 % | 800 - 900 |
| V2 | A1 | K4 | 40 % | 1000 - 1100 |
| V3 | A4 | K2 | 40 % | 1100 - 1200 |
| V3* | A3 | K1 | 60 % | 1100 - 1200 |
| V4* | A3 | K1 | 80 % | 1300 - 1400 |
| V4 | A1 | K1 | 90 % | 1300 - 1400 |
| V5 | A2 | K2 | 90 % | 1500 -1600 |
| V5* | A3 | K3 | 70 % | 1500 -1600 |
| V6 | A4 | K2 | 90 % | 1600 - 1700 |
| V7 | A3 | K3 | 90 % | 1700 - 1800 |
| V7* | A3 | K3 | 80 % | 1700 - 1800 |
| V8 | A1 | K4 | 90 % | 1900 - 2000 |

## Patentansprüche

1. Stahlflachprodukt, umfassend eine Kernlage, die aus einem Stahl mit in Gew.-%
C: 0,3 - 0,5 %,
Si: 0,150 - 0,350 %,
Mn: 1,100 - 1,400 %,
Al: 0,020 - 0,050 %,
Cr: 0,100 - 0,500 %,
Ti: 0,020 - 0,040 %,
B: 0,002 - 0,004 %
Rest Eisen und herstellungsbedingt unvermeidbare Verunreinigungen, wobei zu diesen Verunreinigungen P: bis zu 0,020 %, S: bis zu 0,003 %, Cu: bis zu 0,100 %, Mo: bis zu 0,050 %, N: bis zu 0,007 %, Ni: bis zu 0,100 %, Nb: bis zu 0,003 %, V: bis zu 0,010 %, Sn: bis zu 0,030 %, Ca: bis zu 0,005 % zählen,
besteht und eine Zugfestigkeit im nach dem Warmpresshärten erhaltenen Zustand von mehr als 1500 MPa aufweist,
sowie
eine stoffschlüssig mit der Kernlage verbundene Decklage, die aus einem Stahl mit in Gew.-%
C: bis zu 0,09 %,
Si: bis zu 0,7 %,
Mn: 0,10 - 1,9 %,
Al: bis zu 0,06 %,
Cr: bis zu 0,4 %,
Nb: bis zu 0,025 %,
Ti: bis zu 0,13 %
Rest Eisen und herstellungsbedingt unvermeidbaren Verunreinigungen, wobei zu den Verunreinigungen P: bis zu 0,025 %, S: bis zu 0,015 %, Cu: bis zu 0,15 %, Mo: bis zu 0,05 %, N: bis zu 0,006 %, Ni: bis zu 0,15 %, V: bis zu 0,02 %, B: bis zu 0,001 %, Sn: bis zu 0,04 % und Ca: bis zu 0,003 % zählen, besteht,
wobei das Stahlflachprodukt im Bereich der Decklage im nach dem Warmpresshärten erhaltenen Zustand eine Zugfestigkeit aufweist, die höchstens der Hälfte der Zugfestigkeit des Stahls der Kernlage im fertig gehärteten Zustand entspricht, und deren Dehnung A80 mindestens dem 1,5-fachen der Dehnung A80 der Kernlage im fertig gehärteten Zustand entspricht und
wobei die Kernlage 60 - <80 % der Dicke des Stahlflachprodukts einnimmt.

2. Stahlflachprodukt nach Anspruch 1, **dadurch gekennzeichnet, dass** die Zugfestigkeit der Kernlage im nach dem Warmpresshärten erhaltenen Zustand mindestens 1600 MPa beträgt.

3. Stahlflachprodukt nach einem der voranstehenden Ansprüche, **dadurch**
**gekennzeichnet, dass** die Zugfestigkeit der Decklage höchstens einem Drittel der Zugfestigkeit der Kernlage im pressgehärteten Zustand entspricht.

4. Stahlflachprodukt nach einem der voranstehenden Ansprüche, **dadurch**
**gekennzeichnet, dass** im pressgehärteten Zustand die Dehnung A80 der Decklage mindestens doppelt so hoch ist wie die Dehnung A80 der Kernlage.

5. Stahlflachprodukt nach einem der voranstehenden Ansprüche, **dadurch**
**gekennzeichnet, dass** die Kernlage aus einem Stahl besteht, der neben Eisen und herstellungsbedingt unvermeidbaren Verunreinigungen, in Gew.-%
C: 0,3 - 0,45 %,
Si: 0,2 - 0,28 %,
Mn: 1,15 - 1,3 %,
Al: 0,03 - 0,04 %,
Cr: 0,14 - 0,45 %,
Ti: 0,026 - 0,34 %,
und
B: 0,002 - 0,003 %
enthält.

6. Stahlflachprodukt nach einem der voranstehenden Ansprüche, **dadurch**
**gekennzeichnet, dass** die Decklage aus einem Stahl besteht, der neben Eisen und herstellungsbedingt unvermeidbaren Verunreinigungen, in Gew.-%
C: 0,002 - 0,075,
Si: 0,01 - 0,6 %,
Mn: 0,13 - 1,8 %,
Al: 0,03 - 0,04 %,
Cr: 0,025 - 0,35 %,
Nb: 0,002 - 0,02 %,
und
Ti: 0,002 - 0,12 %
enthält.

7. Verfahren zur Herstellung eines Bauteils für eine Fahrzeugkarosserie, bei dem ein gemäß einem der voranstehenden Ansprüche ausgebildetes Stahlflachprodukt warmumgeformt und anschließend gehärtet wird.

8. Verfahren nach Anspruch 7, **dadurch gekennzeichnet, dass** das Bauteil im nach dem Härten erhaltenen Zustand einem Beschnitt unterzogen wird.

9. Verfahren zur Herstellung einer Karosserie für ein Kraftfahrzeug, bei dem ein gemäß einem der Ansprüche 7 oder 8 hergestelltes Bauteil bereitgestellt wird und bei dem das Bauteil mit einem weiteren Bauteil der Karosserie durch Schweißen verbunden wird.

## Claims

1. Steel flat product comprising a core layer made of a steel of in wt.%:
C: 0.3-0.5%,
Si: 0.150-0.350%,
Mn: 1.100-1.400%
Al: 0.020-0.050%,
Cr: 0.100-0.500%,
Ti: 0.020-0.040%
B: 0.002-0.004%
residual iron and unavoidable impurities due to production, wherein these impurities comprise P: up to 0.020%, S: up to 0.003%, Cu: up to 0.100%, Mo: up to 0.050%, N: up to 0.007%, Ni: up to 0.100%, Nb: up to 0.003%, V: up to 0.010%, Sn: up to 0.030%, Ca: up to 0.005%,
and having a tensile strength of more than 1500 MPa in the state obtained after hot press hardening,
as well as
a cover layer firmly bonded to the core layer consisting of a steel of in wt.-%:
C: up to 0.09%,
Si: up to 0.7%,
Mn: 0.10-1.9%
Al: up to 0.06%,
Cr: up to 0.4%,
Nb: up to 0.025%,
Ti: up to 0.13%
residual iron and unavoidable impurities due to production, wherein the impurities comprise P: up to 0.025%, S: up to 0.015%, Cu: up to 0.15%, Mo: up to 0.05%, N: up to 0.006%, Ni: up to 0.15%, V: up to 0.02%, B: up to 0.001%, Sn: up to 0.04%, and Ca: up to 0.003%,
wherein the flat steel product in the region of the cover layer in the state obtained after hot press hardening has a tensile strength equal to at most half the tensile strength of the steel of the core layer in the fully hardened state, and whose elongation A80 corresponds to at least 1.5 times the elongation A80 of the core layer in the completely hardened state, and
wherein the core layer occupies 60 - < 80% of the thickness of the steel flat product.

2. Steel flat product according to claim 1, **characterised in that** the tensile strength of the core layer is at least 1600 MPa in the state obtained after the hot press hardening.

3. Steel flat product according to any one of the preceding claims, **characterised in that** the tensile strength of the cover layer corresponds to at most one third of the tensile strength of the core layer in the press-hardened state.

4. Steel flat product according to any one of the preceding claims, **characterised in that** in the press-hardened state, the elongation A80 of the cover layer is at least twice as high as the elongation A80 of the core layer.

5. Steel flat product according to any one of the preceding claims, **characterised in that** the core layer consists of a steel which, in addition to iron and unavoidable impurities due to its production, comprises in wt.-%:
C: 0.3-0.45%,
Si: 0.2-0.28%,
Mn: 1.15-1.3%,
Al: 0.03-0.04%,
Cr: 0.14-0.45%,
Ti: 0.026 - 0.34%,
and
B: 0.002 - 0.003%.

6. Steel flat product according to any one of the preceding claims, **characterised in that** the cover layer consists of a steel which, besides iron and unavoidable impurities due to its production, comprises in wt.-%:
C: 0.002-0.075%,
Si: 0.01-0.6%,
Mn: 0.13-1.8%,
Al: 0.03-0.04%,
Cr: 0.025-0.35%,
Nb: 0.002-0.02%,
and
Ti: 0.002 - 0.12%.

7. Method for manufacturing component for a vehicle body, in which a steel flat product formed according to any one of the preceding claims is hot-worked and subsequently hardened.

8. Method according to claim 7, **characterised in that** the component is subjected to trimming in the state obtained after hardening.

9. Method for manufacturing a body for a motor vehicle, in which a component manufactured according to any one of Claims 7 or 8 is provided, and in which the component is connected to another component of the body by welding.

## Revendications

1. Produit plat en acier, comportant une couche centrale, qui se compose d'un acier contenant en % en poids :
C : 0,3 - 0,5 %,
Si : 0,150 - 0,350 %,
Mn : 1,100 - 1,400 %,
Al : 0,020 - 0,050 %,
Cr : 0,100 - 0,500 %,
Ti : 0,020 - 0,040 %,
B : 0,002 - 0,004 %
le reste étant du fer et des impuretés inévitables résultant du procédé de production, les composants suivants faisant partie de ces impuretés : P : jusqu'à 0,020 % ; S : jusqu'à 0,003 %, Cu : jusqu'à 0,100 %, Mo : jusqu'à 0,050 %, N : jusqu'à 0,007 %, Ni : jusqu'à 0,100 %, Nb : jusqu'à 0,003 %, V : jusqu'à 0,10 %, Sn : jusqu'à 0,030 %, Ca : jusqu'à 0,005 %,
et qui présente une résistance à la traction supérieure à 1 500 MPa dans l'état obtenu à la suite du durcissement par compression à chaud,
ainsi qu'
une couche de revêtement liée à la couche centrale par une liaison par matière, ladite couche de revêtement étant composée d'un acier contenant en % en poids :
C : jusqu'à 0,09 %,
Si : jusqu'à 0,7 %,
Mn : 0,10 - 1,9 %,
Al : jusqu'à 0,06 %,
Cr : jusqu'à 0,4 %,
Nb : jusqu'à 0,025 %,
Ti : jusqu'à 0,13 %
le reste étant du fer et des impuretés inévitables résultant du procédé de production, les composants suivants faisant partie de ces impuretés : P : jusqu'à 0,025 %; S : jusqu'à 0,015 %, Cu : jusqu'à 0,15 %, Mo : jusqu'à 0,05 %, N : jusqu'à 0,006 %, Ni : jusqu'à 0,15 %, V : jusqu'à 0,02 %, B : jusqu'à 0,001 %, Sn : jusqu'à 0,04 %, Ca : jusqu'à 0,003 %,
où le produit plat en acier présente, dans la zone de la couche de revêtement, dans l'état obtenu après le durcissement par compression à chaud, une résistance à la traction qui correspond au maximum à la moitié de la résistance à la traction de l'acier de la couche centrale à l'état durci fini, et dont l'allongement A80 correspond au minimum à 1,5 fois l'allongement A80 de la couche centrale à l'état durci fini et
où la couche centrale prend 60 - < 80 % de l'épaisseur du produit plat en acier.

2. Produit plat en acier selon la revendication 1, **caractérisé en ce que** la résistance à la traction de la couche centrale est d'au moins 1 600 MPa dans l'état obtenu après le durcissement par compression à chaud.

3. Produit plat en acier selon l'une des revendications précédentes, **caractérisé en ce que** la résistance à la traction de la couche de revêtement correspond au maximum à un tiers de la résistance à la traction de la couche centrale à l'état durci par pression.

4. Produit plat en acier selon l'une des revendications précédentes, **caractérisé en ce que**, à l'état durci par pression, l'allongement A80 de la couche de revêtement est au moins deux fois plus élevé par rapport à l'allongement A80 de la couche centrale.

5. Produit plat en acier selon l'une des revendications précédentes, **caractérisé en ce que** la couche centrale se compose d'un acier qui contient, outre du fer et des impuretés inévitables résultant du procédé de production, en % en poids :
C : 0,3 - 0,45 %,
Si : 0,2 - 0,28 %,
Mn : 1,15 - 1,3 %,
Al : 0,03 - 0,04 %,
Cr : 0,14 - 0,45 %,
Ti : 0,026 - 0,34 %,
et
B : 0,002 - 0,003 %.

6. Produit plat en acier selon l'une des revendications précédentes, **caractérisé en ce que** la couche de revêtement se compose d'un acier qui contient, outre du fer et des impuretés inévitables résultant du procédé de production, en % en poids :
C : 0,002 - 0,075 %,
Si : 0,01 - 0,6 %,
Mn : 0,13 - 1,8 %,
Al : 0,03 - 0,04 %
Cr : 0,025 - 0,35 %
Nb : 0,002 - 0,02 %
et
Ti : 0,002 - 0,12 %.

7. Procédé de fabrication d'une pièce pour une carrosserie de véhicule, lors duquel un produit plat en acier conçu selon l'une des revendications précédentes est déformé à chaud et est ensuite durci.

8. Procédé selon la revendication 7, **caractérisé en ce que** la pièce à l'état obtenu après le durcissement est soumise à un détourage.

9. Procédé de fabrication d'une carrosserie pour un véhicule automobile, lors duquel une pièce produite selon l'une des revendications 7 ou 8 est mise à disposition et lors duquel la pièce est reliée à une autre pièce de la carrosserie par soudage.
